# DEMANDE DE BREVET EUROPEEN

(11) **EP 3 421 901 A1**
(43) Date de publication de la demande: **02.01.2019**
(21) Numéro de dépôt: 18178898.5
(22) Date de dépôt: 20.06.2018
(51) Int. Cl.: F24H 3/04, B60H 1/22

(54) **DISPOSITIF DE CHAUFFAGE ADDITIONNEL ÉLECTRIQUE ET INSTALLATION DE CHAUFFAGE, VENTILATION ET/OU CLIMATISATION COMPORTANT UN TEL DISPOSITIF DE CHAUFFAGE ADDITIONNEL**

(30) Priorité: 28.06.2017 FR 1755981
(71) Demandeur: Valeo Systemes Thermiques-THS, 78322 Le Mesnil Saint Denis Cedex (FR)
(72) Inventeur: FOURGOUS, Pascal, 78320 LE MESNIL SAINT-DENIS CEDEX (FR)
(74) Mandataire: Metz, Gaëlle

(57) **Abrégé**

La présente invention a pour objet un dispositif de chauffage additionnel électrique pour le chauffage d'un flux d'air, le dispositif comportant un boîtier (5) comprenant un compartiment de chauffe (7) destiné à loger au moins un module chauffant, le boîtier (5) présentant:
• une première extrémité (51) comprenant au moins une ouverture (52) destinée à permettre l'insertion du module chauffant,
• une deuxième extrémité (53) fermée disposée à l'opposé de la première extrémité (51), et
• au moins deux traverses (55) reliant la première extrémité (51) et la deuxième extrémité (53) fermée,
le boîtier (5) présentant :
• un premier plan de symétrie (P1) selon un plan défini l'axe longitudinal des traverses (55) et par la première (51) et la deuxième (53) extrémités, et
• un deuxième plan de symétrie (P2) perpendiculaire au premier plan de symétrie (P1), la ligne de coupe formant l'axe longitudinal du boîtier (5).

## Description

La présente invention se rapporte au domaine des installations de chauffage, ventilation et/ou climatisation pour véhicule automobile. Plus particulièrement, la présente invention se rapporte à un dispositif de chauffage additionnel électrique intégré au sein d'une telle installation de chauffage, ventilation et/ou climatisation.

Les installations de chauffage, ventilation et/ou climatisation sont généralement connues sous l'acronyme HVAC pour Heating, Ventilation and Air-Conditioning en anglais. De nos jours, ces installations comportent un dispositif de chauffage additionnel permettant d'envoyer vers l'intérieur d'un habitacle de véhicule automobile de l'air chaud dès le démarrage du véhicule automobile, c'est-à-dire même si le moteur est encore froid Ces dispositifs de chauffage additionnel comportent généralement au moins un câble de branchement permettant sa connexion électrique sur la batterie du véhicule automobile par exemple.

Les installations de chauffage, ventilation et/ou climatisation présentent par ailleurs un cadre extérieur permettant leur installation dans le véhicule automobile. Cependant, que le véhicule soit à conduite à droite ou à conduite à gauche, la disposition de l'installation de chauffage, ventilation et/ou climatisation dans le véhicule et la forme extérieure est différente. De ce fait, le dispositif de chauffage additionnel, et notamment sa structure, doit être modifié pour pouvoir être utilisé pour une installation de chauffage, ventilation et/ou climatisation pour un véhicule à conduite à droite ou à gauche. Cette modification du dispositif de chauffage additionnel est nécessaire pour assurer le passage du ou des câbles permettant la connexion électrique du dispositif de chauffage additionnel. Ainsi, il est nécessaire de proposer des dispositifs de chauffage additionnel pour les véhicules à conduite à droite et pour les véhicules à conduite à gauche, ces dispositifs de chauffage additionnel étant chacun adaptés à l'installation de chauffage, ventilation et/ou climatisation correspondante.

Cependant, cette nécessité d'adapter le dispositif de chauffage additionnel au côté de conduite du véhicule automobile présente différents inconvénients. En effet, il est nécessaire de prévoir une ligne de production, ainsi que des moules de fabrication spécifiques pour les dispositifs de chauffage additionnel pour les véhicules à conduite à droite et pour les véhicules à conduite à gauche. Cela entraîne des coûts de fabrication importants. Par ailleurs, le stockage de ces dispositifs de chauffage est également coûteux car il est nécessaire de stocker des dispositifs de chauffage additionnel pour les véhicules à conduite à droite et pour les véhicules à conduite à gauche. Par ailleurs, la nécessité d'avoir des dispositifs de chauffage additionnels spécifiques pour les véhicules à conduite à droite et pour les véhicules à conduite à gauche présente un problème de disponibilité des pièces pour le client devant remplacer le dispositif de chauffage additionnel. En effet, les professionnels de la réparation automobile dans les pays dans lesquels les véhicules sont à conduite à gauche, comme la France par exemple, peuvent ne pas avoir en stock de dispositifs de chauffage additionnel pour les véhicules à conduite à droite, comme les véhicules venant de Grande-Bretagne par exemple. Ainsi, les professionnels de la réparation automobile peuvent ne pas être en capacité de remplacer le dispositif de chauffage additionnel du véhicule de leur client car ils ne disposent pas de la pièce ou les délais de livraison sont trop importants afin de pouvoir réaliser le dépannage dans un temps raisonnable.

Un objectif de la présente invention est de pallier au moins partiellement les défauts de l'art antérieur énoncés ci-dessus.

Un autre objectif de la présente invention est de proposer un dispositif de chauffage additionnel qui peut être installé dans une installation de chauffage, ventilation et/ou climatisation d'un véhicule à conduite à droite ou à gauche.

Un autre objectif de la présente invention, différent des objectifs précédents, est de proposer un dispositif de chauffage additionnel dont les coûts de fabrication ou de stockage sont optimisés.

Un autre objectif de la présente invention est de proposer une installation de chauffage, ventilation et/ou climatisation pour véhicule à droite ou à gauche comprenant un dispositif de chauffage additionnel qui reste identique, que l'installation soit installée dans un véhicule à conduite à droite ou à gauche.

A cet effet, pour atteindre au moins partiellement au moins un des objectifs précités, la présente invention a pour objet un dispositif de chauffage additionnel électrique pour le chauffage d'un flux d'air traversant notamment un conduit d'une installation de ventilation, chauffage et/ou climatisation d'un véhicule automobile, le dispositif de chauffage additionnel comportant un boîtier de forme générale parallélépipédique comprenant un compartiment de chauffe destiné à loger au moins un module chauffant, le boîtier présentant :
- une première extrémité comprenant au moins une ouverture destinée à permettre l'insertion de l'au moins un module chauffant dans le compartiment de chauffe,
- une deuxième extrémité fermée disposée à l'opposé de la première extrémité et parallèle à celle-ci, et
- au moins deux traverses disposées de part et d'autre du boîtier et reliant la première extrémité et la deuxième extrémité fermée,
le boîtier présentant :
- un premier plan de symétrie selon un plan défini d'une part par l'axe longitudinal des traverses et d'autre part par la première et à la deuxième extrémités, et
- un deuxième plan de symétrie perpendiculaire au premier plan de symétrie, la ligne de coupe entre le premier et le deuxième plans de symétrie formant l'axe longitudinal du boîtier.

La présence du premier et du deuxième plans de symétrie permet l'installation du dispositif de chauffage additionnel dans une installation de chauffage, ventilation et/ou climatisation aussi bien dans un véhicule automobile à conduite à droite ou à conduite à gauche.

Le dispositif de chauffage additionnel peut comprendre en outre une ou plusieurs des caractéristiques suivantes prises seules ou en combinaison.

Le dispositif de chauffage additionnel électrique comprend une interface de connexion disposée au niveau de la première extrémité du boîtier, ladite interface de connexion présentant une première surface recouvrant la première extrémité du boîtier et une deuxième surface opposée à la première surface, lesdites première et deuxième surfaces étant reliées par une paroi circonférentielle, la paroi circonférentielle présentant deux ouvertures disposées de part et d'autre d'un plan médian de l'interface de connexion, le plan médian étant parallèle au premier plan de symétrie à l'état assemblé du dispositif de chauffage additionnel, les deux ouvertures étant configurées pour coopérer de manière alternative avec un câble de connexion selon que l'installation de chauffage, ventilation et/ou climatisation est pour un véhicule à conduite à droite ou à conduite à gauche.

Selon un aspect, le câble de connexion correspond à un câble de masse.

Selon une première variante, les ouvertures sont disposées symétriquement l'une par rapport à l'autre selon le plan médian.

Selon une deuxième variante, les ouvertures sont disposées asymétriquement l'une par rapport à l'autre selon le plan médian.

L'interface de connexion comporte un dispositif électronique intégré configuré pour piloter l'au moins un module chauffant.

La première surface de l'interface de connexion correspond à un connecteur présentant le dispositif électronique intégré, le connecteur étant destiné à être recouvert par un couvercle formé par la deuxième surface et la paroi circonférentielle de l'interface de connexion, le couvercle étant destiné à coopérer par encliquetage avec le connecteur.

Selon un mode de réalisation, la deuxième surface présente une fiche de connexion d'alimentation de l'interface de connexion.

La deuxième surface peut présenter également une fiche de connexion de commande destinée à piloter le dispositif de chauffage additionnel

Selon un mode de réalisation particulier, l'interface de connexion présente une première paire et une deuxième paire de bords de forme prismatique disposées à chaque extrémité de la paroi circonférentielle, lesdites première et deuxième paires de bords de forme prismatique étant configurées pour coopérer avec une installation de chauffage, ventilation et/ou climatisation d'un véhicule à conduite à droite ou à conduite à gauche.

Selon une première variante, les bords de forme prismatique de la première paire et de la deuxième paire sont symétriques par rapport au plan médian.

Selon une deuxième variante, au moins la première paire de bords de forme prismatique est asymétrique par rapport au plan médian.

Selon un mode de réalisation particulier, la première extrémité du boîtier présente au moins deux orifices de fixation configurés pour coopérer avec la première surface de l'interface de connexion de manière à assurer sa fixation sur le boîtier.

Selon ce mode de réalisation particulier, la première surface de l'interface de connexion comporte au moins deux doigts disposés de part et d'autre de cette première surface et configurés pour coopérer avec les au moins deux orifices de fixation de manière à assurer la fixation de l'interface de connexion sur le boîtier.

Toujours selon ce mode de réalisation particulier, les au moins deux doigts coopèrent avec les au moins deux orifices de fixation par encliquetage.

Selon un autre mode de réalisation particulier, le compartiment de chauffe peut présenter au moins un déflecteur configuré pour augmenter et réguler les pertes de charges au niveau de l'installation de chauffage, ventilation et/ou climatisation.

Selon un aspect, le compartiment de chauffe est réalisé en un matériau plastique, notamment en polypropylène chargé en fibres de verre ou en polyamide chargé en fibres de verre.

Selon un autre aspect, le module chauffant est réalisé en matériau à coefficient de température positif, notamment en céramique à coefficient de température positif.

Selon un mode de réalisation particulier, le dispositif de chauffage additionnel électrique comporte quatre compartiments de chauffe et trois modules chauffant disposés entre les compartiments de chauffe.

La présente invention a également pour objet une installation de chauffage, ventilation et/ou climatisation comprenant un logement configuré pour recevoir un dispositif de chauffage additionnel électrique tel que défini précédemment.

D'autres caractéristiques et avantages de la présente invention apparaîtront plus clairement à la lecture de la description suivante, donnée à titre illustratif et non limitatif, et des dessins annexés dans lesquels :
- la figure 1A est une représentation schématique latérale d'une installation de chauffage, ventilation et/ou climatisation pour un véhicule automobile à conduite à gauche présentant un dispositif de chauffage additionnel selon l'invention,
- la figure 1B est une représentation schématique latérale d'une installation de chauffage, ventilation et/ou climatisation pour un véhicule automobile à conduite à droite présentant un dispositif de chauffage additionnel selon l'invention,
- la figure 2A est une représentation schématique latérale de l'installation de chauffage, ventilation et/ou climatisation de la figure 1A présentant un logement configuré pour accueillir un dispositif de chauffage additionnel,
- la figure 2B est une représentation schématique latérale de l'installation de chauffage, ventilation et/ou climatisation de la figure 1B présentant un logement configuré pour accueillir un dispositif de chauffage additionnel,
- la figure 3A est une représentation schématique en perspective du dispositif de chauffage additionnel de la figure 1A,
- la figure 3B est une représentation schématique en perspective du dispositif de chauffage additionnel de la figure 1B,
- la figure 4 est une représentation schématique en perspective d'un boîtier d'un dispositif de chauffage additionnel selon l'invention,
- la figure 5 est une représentation schématique de côté d'un dispositif de chauffage additionnel selon l'invention comportant des modules chauffant,
- la figure 6A est une représentation schématique latérale en perspective d'une interface de connexion, et
- la figure 6B est une représentation schématique de face de l'interface de connexion de la figure 6A.

Sur ces figures, les éléments identiques portent les mêmes références numériques.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Dans la description suivante, il est fait référence à une première et à une deuxième extrémités du boîtier, à un premier et à un deuxième plans de symétrie, à une première et une deuxième surfaces de l'interface de connexion, et à une première et à une deuxième paires de bords de forme prismatique. Il s'agit d'un simple indexage pour différencier et dénommer des éléments proches mais non identiques. Cette indexation n'implique pas une priorité d'un élément par rapport à un autre et on peut aisément interchanger de telles dénominations sans sortir du cadre de la présente description. Cette indexation n'implique pas non plus un ordre dans le temps par exemple pour apprécier la disposition du dispositif de chauffage additionnel dans l'installation de chauffage, ventilation et/ou climatisation, son fonctionnement, ou encore son installation.

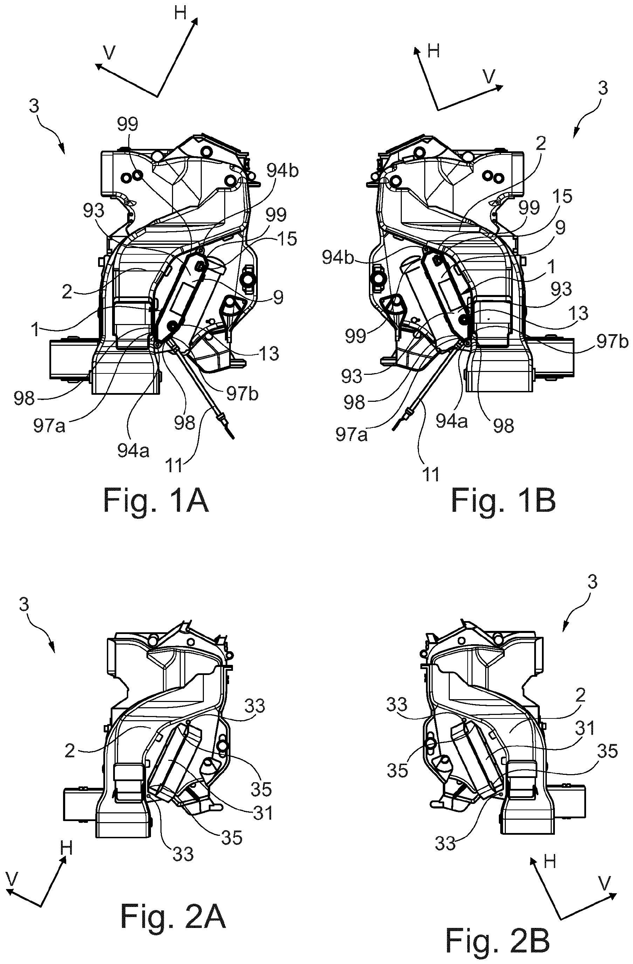

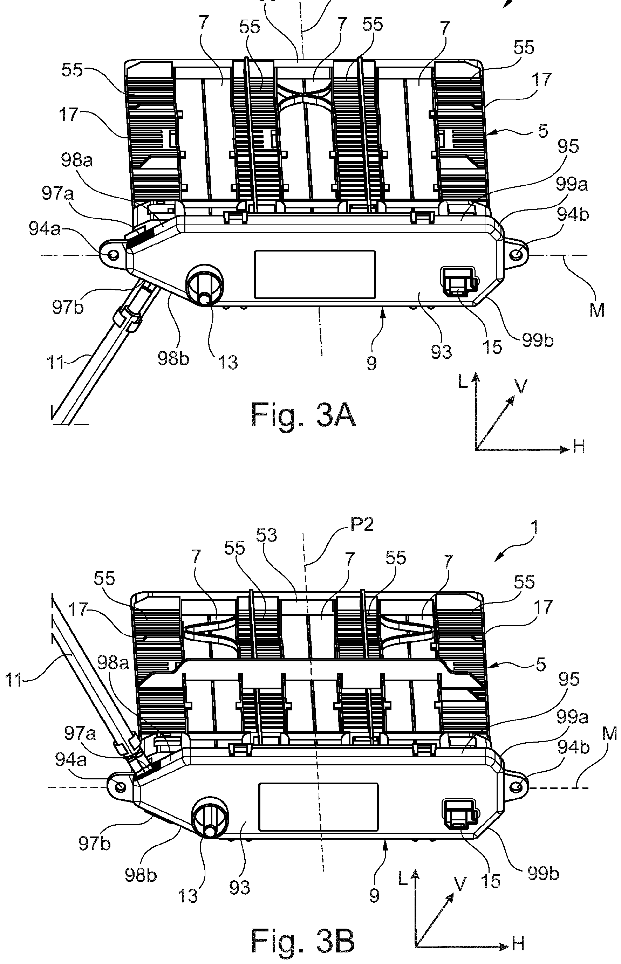

Dans la description suivante, on se réfère à une orientation en fonction des axes Longitudinaux, Verticaux et définissant une Hauteur tels que définis arbitrairement par le trièdre H, L, V, notamment représenté sur les figures 3A à 4 et partiellement représenté sur les figures 1A à 2B, et 5 à 6B. Le choix des appellations de ces axes n'est pas limitatif de l'orientation que peut prendre le dispositif de chauffage additionnel dans son application à un véhicule automobile.

Dans la description suivante, on entend par « véhicule à conduite à gauche », un véhicule automobile dont le poste de conduite, et plus particulièrement le volant est situé sur la partie gauche du véhicule dans la marche avant de ce véhicule, cela peut correspondre par exemple à un véhicule du parc roulant français. De même, on entend par « véhicule à conduite à droite » un véhicule automobile dont le volant est situé sur la partie droite du véhicule dans la marche avant de ce véhicule, cela peut correspondre par exemple à un véhicule du parc roulant britannique.

Par ailleurs, on entend par « plan de symétrie » dans la description suivante une symétrie par rapport à un plan passant par le milieu d'une face du dispositif de chauffage additionnel et s'étendant perpendiculairement à cette face.

De plus, on entend par « asymétrique » dans la description suivante, une absence totale ou partielle de symétrie par rapport à un plan défini, et plus particulièrement par rapport à un plan médian de l'interface de connexion.

D'autre part, on entend dans la description par « à l'état assemblé du dispositif de chauffage additionnel », la disposition des différents éléments lorsque l'interface de connexion est fixée sur le boîtier afin de former le dispositif de chauffage additionnel

En référence aux figures 1A à 2B, il est représenté une installation de chauffage, ventilation et/ou climatisation 3 pour un véhicule à conduite à gauche (figures 1A et 2A) ou pour un véhicule à conduite à droite (figures 1B et 2B). Cette installation de chauffage, ventilation et/ou climatisation 3 est également dénommée HVAC pour l'acronyme anglais Heating, Ventilation and/or Air-Conditinioning. En référence aux figures 1A et 1B, l'installation de chauffage, ventilation et/ou climatisation 3 comprend un conduit 2 à travers lequel passe l'air en direction d'un habitacle du véhicule automobile et un dispositif de chauffage additionnel 1 destiné à chauffer l'air passant dans le conduit 2 pour des raisons notamment de confort des passagers à l'intérieur du véhicule automobile, ou encore pour améliorer l'efficacité du désembuage du pare-brise du véhicule automobile.

En référence aux figures 3A à 5, le dispositif de chauffage additionnel 1 comprend un boîtier 5 et une interface de connexion 9.

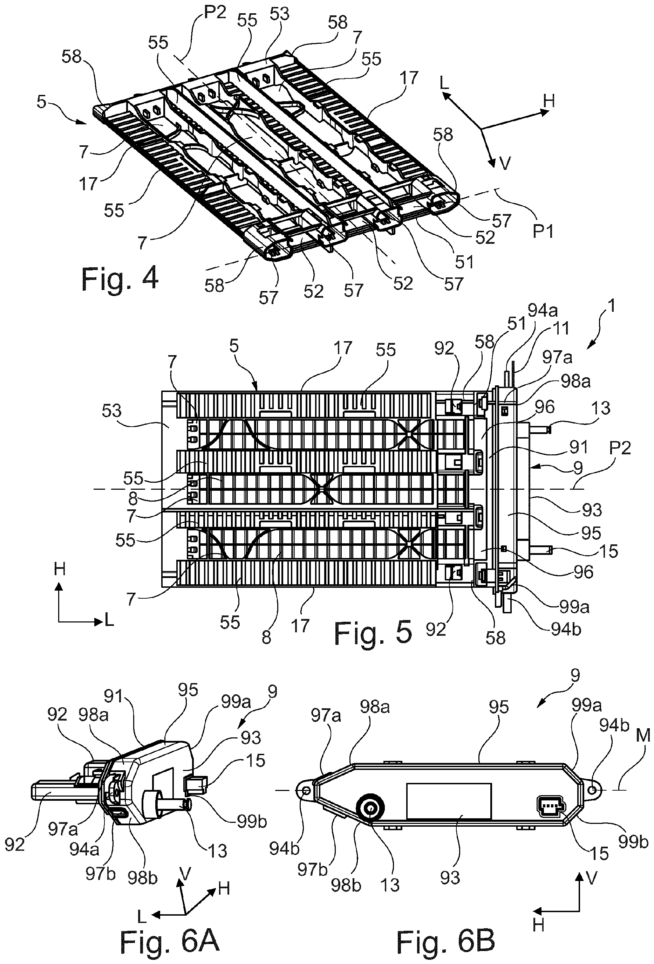

Le boîtier 5 est de forme générale parallélépipédique. Par ailleurs, le boîtier 5 comprend un compartiment de chauffe 7 destiné à loger au moins un module chauffant 8 (visible sur la figure 5). D'autre part, le boîtier 5 présente une première extrémité 51, une deuxième extrémité 53 fermée disposée à l'opposé de la première extrémité 51 et parallèle à celle-ci, et au moins deux traverses 55 disposées de part et d'autre du boîtier 5 et reliant la première extrémité 51 et la deuxième extrémité 53 fermée.

La première extrémité 51 comprend au moins une ouverture 52 destinée à permettre l'insertion de l'au moins un module chauffant 8 dans le compartiment de chauffe 7. D'autre part, la deuxième extrémité 53 fermée est configurée pour retenir l'au moins un module chauffant 8 à l'intérieur du compartiment de chauffe 7. Par ailleurs, chaque première 51 et deuxième 53 extrémités du boîtier présentent des formes externes 58 disposées à chacune des extrémités et destinées à coopérer avec un logement 31 de l'installation de chauffage, ventilation et/ou climatisation 3 (visible sur les figures 2A et 2B).

Comme le montre les figures 2A et 2B, l'installation de chauffage, ventilation et/ou climatisation 3 présente un logement 31 configuré pour recevoir le dispositif de chauffage additionnel 1. Par ailleurs, le logement 31 présente des formes complémentaires 35 aux formes externes 58 du boîtier 5 afin de permettre l'insertion du boîtier 5 et le calage de ce boîtier 5 dans une installation de chauffage, ventilation et/ou climatisation 3. D'autre part, afin d'assurer une bonne étanchéité du dispositif de chauffage additionnel 1 lorsqu'il est disposé à l'intérieur du logement 31, l'installation de chauffage, ventilation et/ou climatisation 3 présente des rebords disposés sur le pourtour du logement 31 destinés à accueillir le pourtour de la première surface 91 de l'interface de connexion 9.

En référence à la figure 4, le boîtier 5 présente un premier plan de symétrie P1 selon un plan défini d'une part par l'axe longitudinal des traverses 55 et d'autre part par la première 51 et la deuxième 53 extrémités, c'est-à-dire parallèlement à l'axe de la hauteur H du trièdre. De plus, le boîtier 5 présente un deuxième plan de symétrie P2 perpendiculaire au premier plan de symétrie P1, la ligne de coupe entre le premier P1 et le deuxième P2 plans de symétrie formant l'axe longitudinal du boîtier 5, le deuxième plan de symétrie P2 s'étend donc parallèlement à l'axe longitudinal L du trièdre.

En revenant sur les figures 1A à 2B, le logement 31 est configuré pour recevoir le boîtier 5. La présence de ces deux plans de symétrie assure la coopération du boîtier 5 aussi bien avec une installation de chauffage, ventilation et/ou climatisation 3 d'un véhicule à conduite à droite (figures 1B et 2B) ou d'un véhicule à conduite à gauche (figures 1A et 2A). L'orientation du dispositif de chauffage additionnel 1 dans l'installation de chauffage, ventilation et/ou climatisation 3 est différente selon le côté de conduite du véhicule automobile. Par ailleurs, l'installation de chauffage, ventilation et/ou climatisation 3 présente un cadre, notamment défini par le conduit 2, qui nuit au passage d'un câble de connexion 11 selon les dispositifs de chauffage additionnels de l'art antérieur. Avantageusement, le premier P1 et le deuxième P2 plans de symétrie du boîtier 5 permettent d'assurer l'installation du dispositif de chauffage additionnel 1 aussi bien dans l'installation de chauffage, ventilation et/ou climatisation 3 d'un véhicule à conduite à droite (figure 1B) que d'un véhicule à conduite à gauche (figure 1A).

Selon le mode de réalisation particulier des figures 4 et 5, la première extrémité 51 du boîtier 5 présente au moins deux, et plus particulièrement quatre, orifices de fixation 57 configurés pour coopérer avec une première surface 91 de l'interface de connexion 9. D'autre part, la première surface 91 de l'interface de connexion 9 comporte au moins deux, et plus particulièrement quatre, doigts 92 disposés de part et d'autre de cette première surface 91 et configurés pour coopérer avec les orifices de fixation 57. Cette coopération permet d'assurer la fixation de l'interface de connexion 9 sur le boîtier 5.

En référence à la figure 5, les doigts 92 coopèrent avec les orifices de fixation 57 par encliquetage. La coopération par encliquetage du boîtier 5 et de l'interface de connexion 9 permet de retirer aisément et rapidement l'interface de connexion 9 afin de procéder éventuellement à un remplacement du module chauffant 8 disposé dans l'au moins un compartiment de chauffe 7.

Selon le mode de réalisation particulier des figures 4 et 5, le dispositif de chauffage additionnel 1 électrique comporte trois compartiments de chauffe 7 disposés entre quatre traverses 55 du boîtier 5 et trois modules chauffant 8 disposés dans les compartiments de chauffe 7.

D'autre part, l'interface de connexion 9 présente des broches de raccordement 96 de la première surface 91 au module chauffant 8. Ces broches de raccordement 96 permettent d'alimenter électriquement le module chauffant 8 logé à l'intérieur du compartiment de chauffe 7 de manière à ce que ce module chauffant 8 puisse chauffer le flux d'air passant dans le conduit 2 de l'installation de chauffage, ventilation et/ou climatisation 3.

Selon le mode de réalisation particulier des figures 4 et 5, le compartiment de chauffe 7 présente au moins un déflecteur 17 configuré pour augmenter et réguler les pertes de charges au niveau de l'installation de chauffage, ventilation et/ou climatisation 3.

Par ailleurs, selon le mode de réalisation particulier de la figure 5, les différents compartiments de chauffe 7 présentent le premier P1 et le deuxième P2 plans de symétrie.

Selon le mode de réalisation particulier de la figure 4, le compartiment de chauffe 7 peut comprendre un matériau plastique, notamment en polypropylène chargé en fibres de verre ou en polyamide chargé en fibres de verre. Par ailleurs, le module chauffant 8 peut comprendre un matériau à coefficient de température positif, et notamment en céramique à coefficient de température positif. L'utilisation de tels matériaux pour le boîtier 5 et pour le module chauffant 8 permet d'obtenir un dispositif de chauffage additionnel 1 présentant de bonnes performances et un poids optimisé de manière à satisfaire au confort des occupants de l'habitacle du véhicule automobile en limitant les consommations énergétiques, et notamment en carburant, liées au poids des différents composants de ce véhicule automobile.

Comme illustré aux figures 3A, 3B et 5 ainsi qu'aux figures 6A et 6B, l'interface de connexion 9 est disposée au niveau de la première extrémité 51 du boîtier 5. L'interface de connexion 9 présente une première surface 91 (visible sur les figures 5 à 6B) recouvrant l'au moins une ouverture 52 de la première extrémité 51 du boîtier 5 et une deuxième surface 93 opposée à la première surface 91. Les première 91 et deuxième 93 surfaces sont reliées entre elles par une paroi circonférentielle 95. La paroi circonférentielle 95 peut présenter deux ouvertures 97a, 97b disposées de part et d'autre d'un plan médian M de l'interface de connexion 9. Le plan médian M est parallèle au premier plan de symétrie P1 à l'état assemblé du dispositif de chauffage additionnel 1. Les deux ouvertures 97a, 97b sont configurées pour coopérer de manière alternative avec un câble de connexion 11 comme illustré sur les figures 3A et 3B selon que l'installation de chauffage, ventilation et/ou climatisation 3 est pour un véhicule à conduite à droite (figures 1B et 2B) ou à conduite à gauche (figures 1A et 2A).

Selon un mode de réalisation particulier, le plan médian M et le premier plan de symétrie P1 sont confondus à l'état assemblé du dispositif de chauffage additionnel 1.

La présence des ouvertures 97a, 97b disposées de part et d'autre du plan médian M assure la connexion du dispositif de chauffage additionnel 1 quelque soit le côté de conduite du véhicule automobile. En effet, le conduit 2 ne gêne pas le passage du câble de connexion 11 et son raccordement à l'interface de connexion 9 afin d'alimenter au moins électriquement le dispositif de chauffage additionnel 1 comme le montrent les figures 1A et 1B. Un tel dispositif de chauffage additionnel 1 permet donc de surmonter les problèmes de l'art antérieur, et notamment la nécessité de produire des dispositifs de chauffage additionnel différents selon le côté de conduite du véhicule automobile.

Le câble de connexion 11 peut être un câble de masse. Plus précisément, le câble de connexion 11 coopère avec l'ouverture 97b lorsque le dispositif de chauffage additionnel 1 est installé dans une installation de chauffage, ventilation et/ou climatisation 3 d'un véhicule à conduite à gauche (figures 1A et 3A), et avec l'ouverture 97a lorsqu'il est installé dans une installation de chauffe, ventilation et/ou climatisation 3 d'un véhicule à conduite à droite (figures 1B et 3B). En effet, lorsque le véhicule est un véhicule à conduite à gauche, l'ouverture 97a du dispositif de chauffage additionnel 1 est disposée contre le conduit d'air 2 de l'installation de chauffage, ventilation et/ou climatisation. Ainsi, le raccordement du câble de connexion 11 à l'interface de connexion 9 par cette ouverture 97a est impossible. Il en est de même pour l'ouverture 97b lorsque le véhicule est un véhicule à conduite à droite.

L'interface de connexion 9 peut comporter en outre un dispositif électronique intégré configuré pour piloter l'au moins un module chauffant 8. Plus particulièrement, la première surface 91 présente une face disposée au contact de la première extrémité 51 et une deuxième face opposée à la première face supportant le dispositif électronique intégré. Cette première surface 91 est configurée pour coopérer avec la première extrémité 51 du boîtier 5 afin d'assurer la fixation de l'interface de connexion 9 sur le boîtier 5. Par ailleurs, la deuxième face est destinée à être recouverte par un couvercle formé par la deuxième surface 93 et la paroi circonférentielle 95. Le couvercle est destiné à coopérer avec la première surface 91 par encliquetage par exemple de manière à recouvrir et protéger le dispositif électronique présent sur la première surface 91. La deuxième surface 93 présente une ouverture configurée pour permettre le passage d'une fiche de connexion d'alimentation 13 de l'interface de connexion 9 et une ouverture configurée pour permettre le passage d'une fiche de connexion de commande 15 destinée à recevoir des informations pour piloter le dispositif de chauffage additionnel 1, lesdites fiches de connexion d'alimentation 13 et de commande 15 étant reliées au dispositif électronique intégré.

L'interface de connexion 9 présente par ailleurs une première paire 98a, 98b et une deuxième paire 99a, 99b de bords de forme prismatique disposées à chaque extrémité de la paroi circonférentielle 95. Les première 98a, 98b et deuxième 99a, 99b paires de bords de forme prismatique sont configurées pour coopérer avec l'installation de chauffage, ventilation et/ou climatisation 3 d'un véhicule à conduite à droite (figures 1B et 2B) ou à conduite à gauche (figures 1A et 2A). En effet, l'installation de chauffage, ventilation et/ou climatisation 3 peut présenter des formes complémentaires permettant de placer le dispositif de chauffage additionnel 1 sans être gêné par la configuration de l'installation de chauffage, ventilation et/ou climatisation 3 (conduite à droite ou conduite à gauche). Les première 98a, 98b et deuxième 99a, 99b paires de bords de forme prismatique sont définies par rapport au plan médian M. Plus précisément, la première paire 98a, 98b de bords de forme prismatique correspond à une paire s'étendant de part et d'autre du plan médian M, comme cela est représenté en référence aux figures 3A et 3B. Selon le mode de réalisation particulier représenté ici, la première paire 98a, 98b de bords de forme prismatique présente les ouvertures 97a, 97b.

En référence aux figures 6A et 6B, les ouvertures 97a, 97b sont disposées asymétriquement l'une par rapport à l'autre selon le plan médian M. Par ailleurs, au moins la première paire 98a, 98b de bords de forme prismatique est asymétrique par rapport au plan médian M. Selon le mode de réalisation de la figure 6B, la première paire 98a, 98b de bords de forme prismatique est asymétrique par rapport au plan médian M et la deuxième paire 99a, 99b de bords de forme prismatique est symétrique par rapport au plan médian M.

Selon un autre mode de réalisation non représenté ici, la première paire 98a, 98b de bords de forme prismatique peut être symétrique par rapport au plan médian M et la deuxième paire 99a, 99b de bords de forme prismatique peut être asymétrique par rapport à ce plan médian M.

Selon une autre variante, les première 98a, 98b et deuxième 99a, 99b paires de bords de forme prismatique peuvent être toutes les deux asymétriques par rapport au plan médian M.

Selon encore une autre variante non représentée ici, les bords de forme prismatique de la première paire 98a, 98b et de la deuxième paire 99a, 99b peuvent être symétriques par rapport au plan médian M.

Selon encore un autre mode de réalisation non représenté ici, les ouvertures 97a, 97b peuvent être disposées symétriquement l'une par rapport à l'autre selon le plan médian M.

La disposition et la symétrie par rapport au plan médian M de la première paire 98a, 98b et de la deuxième paire 99a, 99b de bords de forme prismatique peuvent être dépendantes de la forme extérieure de l'installation de chauffage, ventilation et/ou climatisation 3 destinée à coopérer avec l'interface de connexion 9.

Par ailleurs, afin de permettre la fixation du dispositif de chauffage additionnel 1, l'installation de chauffage, ventilation et/ou climatisation 3 présente des ouvertures 33 disposées de part et d'autre du logement 31. Les ouvertures 33 peuvent être taraudées afin de coopérer avec des vis de fixation (non représentées) passant à travers des ouvertures 94a, 94b (visibles sur les figures 3A et 3B) de l'interface de connexion 9, permettant ainsi d'assurer la fixation de l'interface de connexion 9 sur l'installation de chauffage, ventilation et/ou climatisation 3.

Les différents modes de réalisation fournis ici sont décrits uniquement à titre illustratif et non limitatifs. En effet, il est tout à fait possible pour l'homme de l'art d'utiliser d'autres matériaux pour le boîtier 5 et le module chauffant 8 sans sortir du cadre de la présente description. Par ailleurs, il est tout à fait possible pour l'homme de l'art d'utiliser un dispositif de chauffage additionnel 1 présentant une électronique déportée et non intégrée comme décrit ici sans sortir du cadre de la présente description. D'autres part, l'interface de connexion 9 présente selon les modes de réalisation particuliers décrits ici une fiche de connexion 13 d'alimentation et une fiche de connexion 15 de commande, l'homme de l'art pourra ajouter d'autres fiches de connexion sur la deuxième surface 93 de l'interface de connexion 9 ou en enlever sans sortir du cadre de la présente description. Ensuite, dans un mode de réalisation particulier décrit ici, le boîtier 5 et l'interface de connexion 9 coopèrent par encliquetage, cependant il est tout à fait possible pour l'homme de l'art d'envisager tout autre type de coopération entre le boîtier 5 et l'interface de connexion 9 sans sortir du cadre de la présente description. De même, dans la présente description, la première 91 et la deuxième 93 surfaces de l'interface de connexion 9 coopèrent par encliquetage, or il est tout à fait possible pour l'homme de l'art d'envisager d'autres coopérations entre ces première 91 et deuxième 93 surfaces, voir même d'utiliser une interface de connexion 9 réalisée en un seul bloc comprenant éventuellement l'électronique intégrée à l'intérieur de cette interface de connexion 9.

Ainsi, l'obtention d'un dispositif de chauffage additionnel 1 pouvant être installé aussi bien dans une installation de chauffage, ventilation et/ou climatisation 3 pour un véhicule à conduite à droite ou à conduite à gauche est possible grâce au boîtier 5 et éventuellement à l'interface de connexion 9 composant ce dispositif de chauffage additionnel 1 tel que décrits ci-dessus. Par ailleurs, la possibilité d'utiliser un même dispositif de chauffage additionnel 1 pour des installation de chauffage, ventilation et/ou climatisation pour des véhicules automobiles à conduite à droite ou à gauche permet de limiter les coûts de fabrication et de stockage de tels dispositifs de chauffage additionnel 1.

## Revendications

1. Dispositif de chauffage additionnel (1) électrique pour le chauffage d'un flux d'air traversant notamment un conduit (2) d'une installation de ventilation, chauffage et/ou climatisation (3) d'un véhicule automobile, le dispositif de chauffage additionnel (1) comportant un boîtier (5) de forme générale parallélépipédique comprenant un compartiment de chauffe (7) destiné à loger au moins un module chauffant (8), le boîtier (5) présentant :
• une première extrémité (51) comprenant au moins une ouverture (52) destinée à permettre l'insertion de l'au moins un module chauffant (8) dans le compartiment de chauffe (7),
• une deuxième extrémité (53) fermée disposée à l'opposé de la première extrémité (51) et parallèle à celle-ci, et
• au moins deux traverses (55) disposées de part et d'autre du boîtier (5) et reliant la première extrémité (51) et la deuxième extrémité (53) fermée,
**caractérisé en ce que** le boîtier (5) présente :
• un premier plan de symétrie (P1) selon un plan défini d'une part par l'axe longitudinal des traverses (55) et d'autre part par la première (51) et la deuxième (53) extrémités, et
• un deuxième plan de symétrie (P2) perpendiculaire au premier plan de symétrie (P1), la ligne de coupe entre le premier (P1) et le deuxième (P2) plans de symétrie formant l'axe longitudinal du boîtier (5).

2. Dispositif de chauffage additionnel (1) électrique selon la revendication précédente, **caractérisé en ce qu'**il comprend une interface de connexion (9) disposée au niveau de la première extrémité (51) du boîtier (5), ladite interface de connexion (9) présentant une première surface (91) recouvrant la première extrémité (51) du boîtier (5) et une deuxième surface (93) opposée à la première surface (91), lesdites première (91) et deuxième (93) surfaces étant reliées par une paroi circonférentielle (95), la paroi circonférentielle (95) présentant deux ouvertures (97a, 97b) disposées de part et d'autre d'un plan médian (M) de l'interface de connexion (9), le plan médian (M) étant parallèle au premier plan de symétrie (P1) à l'état assemblé du dispositif de chauffage additionnel (1), les deux ouvertures (97a, 97b) étant configurées pour coopérer de manière alternative avec un câble de connexion (11) selon que l'installation de chauffage, ventilation et/ou climatisation (3) est pour un véhicule à conduite à droite ou à conduite à gauche.

3. Dispositif de chauffage additionnel (1) selon la revendication 2, **caractérisé en ce que** les ouvertures (97a, 97b) sont disposées symétriquement l'une par rapport à l'autre selon le plan médian (M).

4. Dispositif de chauffage additionnel (1) selon la revendication 2, **caractérisé en ce que** les ouvertures (97a, 97b) sont disposées asymétriquement l'une par rapport à l'autre selon le plan médian (M).

5. Dispositif de chauffage additionnel (1) selon l'une quelconque des revendications 2 à 4, **caractérisé en ce que** l'interface de connexion (9) comporte un dispositif électronique intégré configuré pour piloter l'au moins un module chauffant (8).

6. Dispositif de chauffage additionnel (1) selon la revendication 5, **caractérisé en ce que** la première surface (91) de l'interface de connexion (9) correspond à un connecteur présentant le dispositif électronique intégré, le connecteur étant destiné à être recouvert par un couvercle formé par la deuxième surface (93) et la paroi circonférentielle (95) de l'interface de connexion (9), le couvercle étant destiné à coopérer par encliquetage avec le connecteur.

7. Dispositif de chauffage additionnel (1) selon l'une quelconque des revendications 2 à 6, **caractérisé en ce que** l'interface de connexion (9) présente une première paire (98a, 98b) et une deuxième paire (99a, 99b) de bords de forme prismatique disposées à chaque extrémité de la paroi circonférentielle (95), lesdites première (98a, 98b) et deuxième (99a, 99b) paires de bords de forme prismatique étant configurées pour coopérer avec une installation de chauffage, ventilation et/ou climatisation (3) d'un véhicule à conduite à droite ou à conduite à gauche.

8. Dispositif de chauffage additionnel (1) selon la revendication 7, **caractérisé en ce que** les bords de forme prismatique de la première paire (98a, 98b) et de la deuxième paire (99a, 99b) sont symétriques par rapport au plan médian (M).

9. Dispositif de chauffage additionnel (1) selon la revendication 7, **caractérisé en ce qu'**au moins la première paire (98a, 98b) de bords de forme prismatique est asymétrique par rapport au plan médian (M).

10. Installation de chauffage, ventilation et/ou climatisation (3) **caractérisée en ce qu'**elle comprend un logement (31) configuré pour recevoir un dispositif de chauffage additionnel (1) électrique selon l'une quelconque des revendications précédentes.
